# EUROPÄISCHE PATENTSCHRIFT

(11) **EP 1 474 718 B1**
(45) Veröffentlichungstag und Bekanntmachung des Hinweises auf die Patenterteilung: **06.06.2007**
(21) Anmeldenummer: 02796573.0
(22) Anmeldetag: 05.12.2002
(51) Int. Cl.: G02C 5/22

(54) **FEDERSCHARNIER**
SPRING HINGE
CHARNIERE A RESSORT

(30) Priorität: 01.02.2002 DE 10204821
(43) Veröffentlichungstag der Anmeldung: 10.11.2004
(73) Patentinhaber: OBE Ohnmacht & Baumgärtner GmbH & Co. KG, 75228 Ispringen (DE)
(72) Erfinder: SCHUCHARD, Klaus, 61479 Glashütten-Schlossborn (DE)
(74) Vertreter: Gleiss, Alf-Olav
(86) Internationale Anmeldenummer: PCT/EP2002/013760
(87) Internationale Veröffentlichungsnummer: WO 2003/065108

(56) Entgegenhaltungen:
- DE-A- 10 042 016
- DE-A- 19 515 495
- DE-A- 19 735 230
- DE-U- 9 306 387
- FR-A- 2 741 459
- FR-A- 2 793 323

## Beschreibung

Die Erfindung betrifft ein.Federscharnier für Brillen gemäß Oberbegriff des Anspruchs 1.

Federscharniere der hier angesprochenen Art sind bekannt. Sie werden verwendet, um das Schließ- und Öffnungsverhalten von Brillenbügeln zu verbessern sowie um die Flexibilität und den Tragekomfort der Brille zu erhöhen. Üblicherweise umfassen solche Scharniere ein mindestens ein Scharnierauge aufweisendes Scharnierelement, ein Verriegelungselement sowie mindestens ein Federelement. Es ist denkbar, dass das Verriegelungselement mit einem Gehäuse des Federscharniers in Eingriff kommt und als Anschlag für das Federelement dient. So ist es möglich, das Scharnierelement und somit das Scharnierauge federnd in dem Gehäuse zu lagern sowie zu arretieren.

Weiter sind hierzu symmetrische Verriegelungselemente bekannt, die beispielsweise zwei gleichgestaltete Rastelemente aufweisen, die mit dem Gehäuse in Eingriff gebracht werden können. Es hat sich jedoch gezeigt, dass die Rastvorrichtungen relativ viel Bauraum benötigen. Derartige Verriegelungselemente werden in der französischen Patentschrift FR-2 793 323 und in dem deutschen Gebrauchsmuster DE-U-9 306 387 beschrieben.

Um diese Nachteile zu vermeiden, wurde versucht, Verriegelungen mit nur einer Rastvorrichtung einzusetzen. Dabei hat sich aber herausgestellt, dass diese aufgrund der Haltekräfte zum Verkanten gegenüber einem Federstift neigen, was in diesem große Biegemomente induzierte sowie zu einem Versagen des Federscharniers bei Gebrauch wegen Verklemmens, führt.

Um dies zu vermeiden, sind asymmetrische Verriegelungen bekannt, die eine röhrenförmige Ausnehmung aufweisen, in der der Federstift lagerbar ist. Schließlich hat sich gezeigt, dass trotz der röhrenförmigen Ausnehmung die Neigung zum Verkanten bleibt und immer noch ein gewisser Verschleiß auftritt. Außerdem hat sich gezeigt, dass für das Führungselement zusätzlicher Bauraum in Längsrichtung des Federstifts vorgesehen werden muss. Folglich ergibt sich zwar ein vergleichsweise schlankes, dafür aber längeres Federscharnier.

Aufgabe der Erfindung ist es daher, ausgehend vom Stand der Technik, ein Federscharnier der eingangs genannten Art zu schaffen, das diesen Nachteil vermeidet.

Zur Lösung dieser Aufgabe wird ein Federscharnier für Brillen vorgeschlagen, das die in Anspruch 1 genannten Merkmale aufweist. Dieses zeichnet sich durch ein elastisch verformbares Verriegelungselement aus, das aus Flachmaterial, insbesondere aus einem Blechstreifen, besteht, das eine Verriegelungsnase aufweist sowie dadurch, dass das Flachmaterial einen Durchbruch zur Aufnahme eines Federstifts umfasst. Dies bietet den Vorteil, dass das Flachmaterial als Anschlag für das Federelement und somit zum Aufnehmen der Federkräfte verwendbar ist. Dabei kann die flache Seite desselben einem Ende des Federelements zugewandt werden, so dass das Verriegelungselement in Längsrichtung des Federscharniers sehr wenig Bauraum benötigt, was ein insgesamt kürzer bauendes Federscharnier ermöglicht.

Bevorzugt wird ein Ausführungsbeispiel der Erfindung, das sich dadurch auszeichnet, dass das Verriegelungselement einen Führungsbereich umfasst. Dieser Führungsbereich kann vorteilhaft mit einem weiteren Führungsbereich des Scharnierelements des Federscharniers zusammenwirken, wodurch das Scharnierelement stabilisiert werden kann. Außerdem können über den Führungsbereich Kräfte in das Verriegelungselement eingeleitet werden, die dieses zusätzlich stabilisieren und in einer gewünschten Position halten, was ein Verkanten desselben gegenüber dem Scharnierelement wirkungsvoll verhindert. Überdies kann der an dem Verriegelungselement und dem Scharnierelement durch Reibung auftretende Verschleiß minimiert werden.

Ein weiteres bevorzugtes Ausführungsbeispiel der Erfindung zeichnet sich dadurch aus, dass der Führungsbereich durch einen Materialstreifen realisierbar ist. Dies bietet den Vorteil, dass die Oberfläche des Streifens ohne aufwendige Bearbeitung als Führungsbereich genutzt werden kann.

Besonders bevorzugt wird ein Ausführungsbeispiel der Erfindung, das sich dadurch auszeichnet, dass das Verriegelungselement als Stanzbiegeteil ausgebildet ist. Ein solches Verriegelungselement lässt sich durch wenige Arbeitsschritte aus handelsüblichem Flachmaterial herstellen und ist daher besonders wirtschaftlich und kostengünstig fertigbar.

Weitere Vorteile ergeben sich aus den übrigen Unteransprüchen.

Die Erfindung wird im Folgenden anhand der Zeichnung näher erläutert. Es zeigen:
- Figur 1: eine Seitenansicht von teilweise geschnittenen Teilen eines Federscharniers mit nicht montierten Scharnierelementen;
- Figuren 2 und 3: Seitenansichten des in Figur 1 gezeigten Federscharniers im montierten Zustand in verschiedenen Funktionsstellungen;
- Figur 4: eine Draufsicht auf ein Scharnierelement mit einer Feder;
- Figuren 5 bis 7: verschiedene Ansichten eines Federscharniergehäuses und
- Figuren 8 bis 10: verschiedene Darstellungen eines Verriegelungselements.

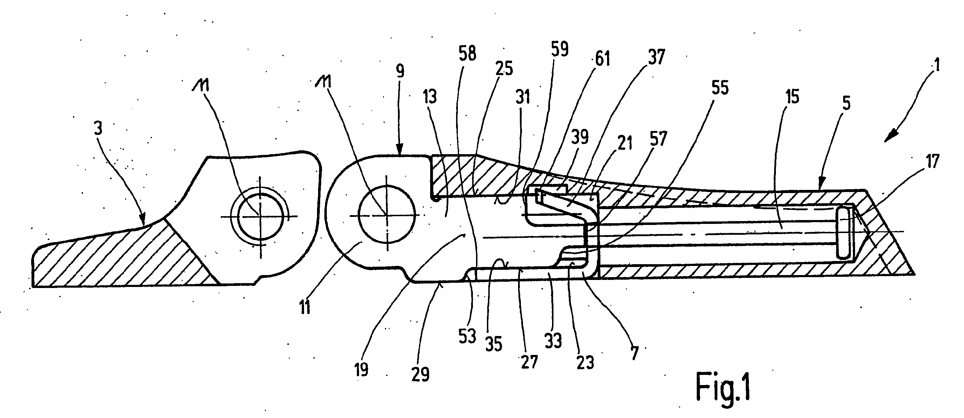

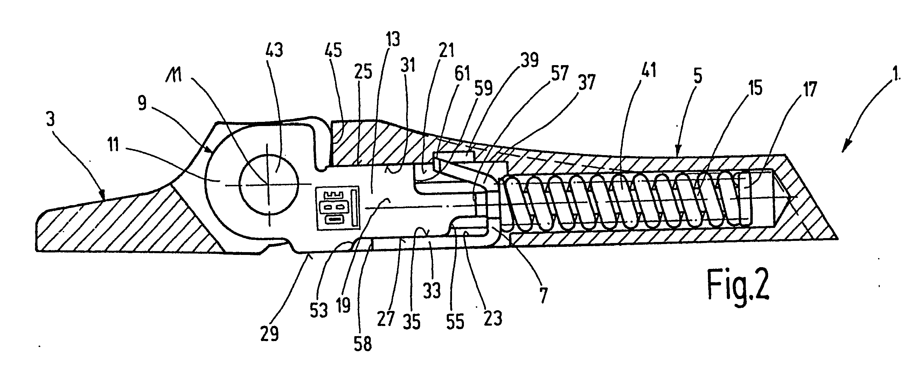

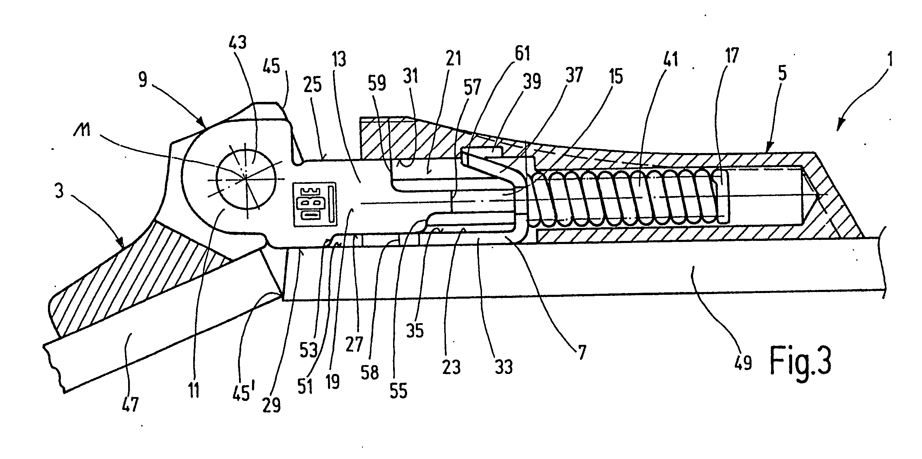

Figur 1 zeigt in Seitenansicht Teile eines demontierten Federscharniers 1, wobei ein erstes Scharnierelement 3 sowie ein Gehäuse 5 im Längsschnitt dargestellt sind. Weiter zu erkennen sind ein Verriegelungselement 7 sowie ein zweites Scharnierelement 9, das ein Scharnierauge 11, einen Führungsbereich 13, einen Federstift 15 -der zur Führung einer in den Figuren 2, 3 dargestellten Feder dient- sowie einen Anschlag 17 aufweist.

Das Scharnierauge 11 sowie der Führungsbereich 13 weisen bei diesem Ausführungsbeispiel zwei gemeinsame, zur Bildebene parallel verlaufende Flächen auf, von denen eine Fläche 19 sichtbar ist. Die Fläche 19 kann zumindest bereichsweise mit Gleitflächen des Gehäuses 5, die hier nicht sichtbar sind, zusammenwirken. Teilweise verdeckt durch das zweite Scharnierelement 9 sowie das Verriegelungselement 7 sind zu den nicht sichtbaren Gleitflächen parallel angeordnete Gleitflächen 21, 23 des Gehäuses 5 zu erkennen. An den Gleitflächen 21, 23 des Gehäuses 5 und an der zur Fläche 19 parallelen Fläche des zweiten Scharnierelements 9 sowie den jeweils nicht sichtbaren Gleitflächen des Gehäuses 5 und der Fläche 19 ist das zweite Scharnierelement 9 in seiner Längsrichtung gleitend lagerbar.

Außerdem weisen der Führungsbereich 13 des zweiten Scharnierelements 9 sowie das Gehäuse 5 weitere, zur Bildebene senkrecht stehende Führungsflächen 25, 27, 29 sowie 31 auf. Dabei sind die Führungsflächen 31 und 25 einander zugeordnet und wirken zusammen. Die Führungsfläche 29 kann mit einem weiteren, hier nicht dargestellten Teil der Brille, beispielsweise einem Bügel, auf dem das Federscharnier 1 aufgesetzt ist, zusammenwirken. Die Führungsfläche 27 wirkt mit einem Führungsbereich 33, der hier als Materialstreifen ausgeführt ist und eine weitere Führungsfläche 35 aufweist, des Verriegelungselements 7 zusammen.

Das Verriegelungselement 7 weist eine Verriegelungsnase 37 auf, die in eine Verriegelungsausnehmung 39 des Gehäuses 5 eingreift und dort verrasten kann.

Die Figuren 2 und 3 zeigen das in Figur 1 dargestellte, montierte Federscharnier 1 in verschiedenen Funktionsstellungen. Gleiche Teile sind mit gleichen Bezugsziffern versehen, so dass insofern auf Figur 1 verwiesen wird.

Figur 2 zeigt das Federscharnier 1 in geöffnetem Zustand, in dem ein Mittelteil einer zugehörigen Brille mit den Brillenbügeln in etwa jeweils einen Winkel von circa 90°, vorzugsweise circa 88°, einnimmt. Diese Stellung entspricht also dem geöffneten Zustand der Brille so wie sie getragen wird.

Figur 3 zeigt das Federscharnier 1 in überweit geöffneter Position. Dabei nehmen das Mittelteil der Brille und die zugehörigen Brillenbügel einen stumpfen Winkel zueinander ein. Diese Position ist sinnvoll beim Abnehmen und Aufsetzen der Brille.

In beiden Darstellungen liegt die Verriegelungsnase 37 an der Verriegelungsausnehmung 39 des Gehäuses 5 an. Das Verriegelungselement 7 wird durch eine Feder 41, die sich zwischen diesem und dem Anschlag 17 befindet gegen die Verriegelungsausnehmung 39 des Gehäuses 5 gedrückt. Die Kraftübertragung erfolgt ausgehend von der Verriegelungsausnehmung 39 des Gehäuses 5 über die Verriegelungsnase 37 des Verriegelungselements 7 hin zur vorgespannten Feder 41, die am Anschlag 17 anliegt über den Federstift 15 des zweiten Scharnierelements 9 zu dessen Scharnierauge 11, das über ein in der Regel durch eine Schraube realisierbares Scharniergelenk 43 des Federscharniers 1 die Kraft auf ein oder zwei weitere Scharnieraugen des ersten Scharnierelements 3 überträgt, das schließlich an einem Bereich 45 der weiteren Scharnieraugen, wie in Figur 2 zu erkennen, an dem Gehäuse 5 anschlägt, also die Gegenkraft in das Gehäuse 5 des Federscharniers 1 einleitet.

In Figur 3 ist das Federscharnier 1 in einer Funktionsstellung gezeigt, in der die Brillenbügel überweit, also mehr als 90° geöffnet sind. Zusätzlich angedeutet sind Brillenteile 47 und 49, wobei beispielsweise das Brillenteil 49 ein angedeuteter Brillenbügel und das Brillenteil 47 ein angedeutetes Mittelteil -oder umgekehrt- der Brille sein können. Die Brillenteile 47, 49 sind auf geeignete Art und Weise, beispielsweise durch Schweißen, Kleben, Löten, Bonden, Nieten oder Ähnlichem mit dem Federscharnier 1 verbunden und werden so durch dieses angelenkt.

Die Funktionsdarstellung nach Figur 3 entspricht der maximalen Auslenkung der Brillenteile 47, 49, wobei die Federwindungen der Feder 41 auf Block liegen und die Brillenteile 47, 49 beispielsweise einen stumpfen Winkel von 157° zueinander einnehmen. Diese Anlenkung der Brillenteile ermöglicht eine große Aufspreizung der Brillenbügel, so dass die Brille komfortabel auf- und abgesetzt werden kann. In dieser Funktionsstellung ist die Gegenkraft der Feder 41 auf das zweite Scharnierelement 9 maximal, das diese auf das erste Scharnierelement 3 überträgt. Zu erkennen ist auch, dass die Gegenkraft in dieser Funktionsstellung über die Brillenteile 47, 49 an einem Bereich 45' vom ersten Scharnierelement 3 über das Brillenteil 49 auf das Gehäuse 5 übertragen wird.

Das Scharniergelenk 43 des Federscharniers 1 weist einen Drehpunkt M auf, von dem der Bereich. 45' in einem Abstand angeordnet ist. Aufgrund der übertragenen Federkräfte ergibt sich also ein Drehmoment, das ausgehend von der in Figur 3 dargestellten Funktionsstellung den Winkel der Brillenteile 47, 49 bei diesem Ausführungsbeispiel um circa 157° bis auf circa 182°, was der in der Figur 2 dargestellten Funktionsstellung entspricht, vergrößert. Die in Figur 2 dargestellte Funktionsstellung entspricht einer Gleichgewichtsstellung, wobei die Feder 41 eine maximale Länge aufweist und die Federkraft über die Bereiche 45, 45' von dem ersten Scharnierelement 3 so in das Gehäuse 5 eingeleitet werden, dass Momentengleichgewicht herrscht. Das erste Scharnierelement 3 liegt so an der Stirnseite des Gehäuses an, das sich eine definierte Funktionsstellung aller Scharnierelemente zueinander ergibt.

Zum Schließen der Brille kann der Winkel weiter vergrößert werden, bis die Brillenbügel in etwa parallel zum Mittelteil der Brille liegen. Beim Tragen der Brille können die Brillenteile 47, 49 einen Winkel zueinander einnehmen, der zwischen 157° und 182°, also zwischen den Funktionsdarstellungen gemäß Figur 2 und 3 liegt. Somit kann sich die Brille an den jeweiligen Träger anpassen und wird mittels der eben beschriebenen Umlenkung der Federkraft auf die Brillenbügel, also aufgrund der induzierten Drehmomente, leicht angedrückt, was einen besonders guten Tragekomfort sowie guten Sitz der Brille ermöglicht.

Figur 3 lässt außerdem erkennen, dass selbst beim maximalen Auslenkungswinkel der Brillenteile 47, 49 das zweite Scharnierelement 9 optimal geführt wird. Wichtig ist dabei, dass auch bei maximaler Auslenkung, also dann, wenn die Feder 41 gemäß Figur 3 auf Block liegt, die einzelnen Führungsflächen noch in einem genügenden Maß in Anlagekontakt sind.

Im Einzelnen wirken jeweils Teile der ersten Führungsfläche 25 des zweiten Scharnierelements 9 mit der vierten Führungsfläche 31 des Gehäuses 5 sowie die zweite Führungsfläche 27 des zweiten Scharnierelements 9 mit der fünften Führungsfläche 35 des Führungsbereichs 33 des Verriegelungselements 7 sowie die dritte Führungsfläche 29 des zweiten Scharnierelements 9 mit einer sechsten Führungsfläche 51 des Brillenteils 49 zusammen.

Das zweite Scharnierelement 9 ist also an drei Bereichen jeweils gleitend gelagert und somit gegen Verdrehen und Verkanten aufgrund der durch den Öffnungs- und Schließvorgang der Brillenbügel induzierten Momente geschützt. Außerdem wirken die Gleitflächen 21, 23 seitlich mit dem Führungsbereich 13 des zweiten Scharnierelements 9 zusammen. Dies stabilisiert das zweite Scharnierelement 9 gegenüber dem Gehäuse 5 gegen versehentliches Verdrehen gegeneinander um die Mittelachse des Federstifts 15. Das Federscharnier 1 ist also auch gegen bei einem unsauberen Öffnen und Schließen der Brillenbügel sowie beim Tragen der Brille auftretende Kräfte ausreichend stabilisiert. Durch die Abstützung des Verriegelungselements .7 durch die Führungs- und Gleitflächen lassen sich Ausreißkräfte bis zu 250 N realisieren. Außerdem wird ein Verkanten des Verriegelungselements sicher vermieden.

Außerdem wird deutlich, dass der Führungsbereich 33 des Verriegelungselements 7 das zweite Scharnierelement 9 abstützt. Gleichzeitig wird über das sich auf dem Führungsbereich 33 abstützende zweite Scharnierelement 9 das Verriegelungselement 7 niedergedrückt, also gegen das Brillenteil 49 gedrückt, so dass dieses daran sicher anliegt und so auch trotz der hohen Federkräfte durch die Feder 41, die in das Verriegelungselement 7 eingeleitet werden, sicher positioniert bleibt. Der Führungsbereich 33 des Verriegelungselements 7 wirkt also zusätzlich als Abstützbereich für das zweite Scharnierelement 9 sowie als Niederhalter und/oder Verdrehsicherung für das Verriegelungselement 7. So können die bei auf Block liegender Feder 41 auftretenden hohen Kräfte ohne ein Verkanten oder Verdrehen -und somit ohne den Federstift 15 zu beschädigen- des Verriegelungselements 7 auf dieses beziehungsweise über dieses übertragen sowie von diesem aufgenommen werden. Das Verriegelungselement 7 ist also in allen Funktionsstellungen des Federscharniers 1 verdrehsicher gelagert, so das ein Blockieren des Federstifts 41 sicher vermieden wird.

Die Gleitflächen 27 und 29 des zweiten Scharnierelements 9 gehen über eine Stufe 53 ineinander über, wobei die Höhe der Stufe 53 der Dicke des Führungsbereichs 33 des Verriegelungselements 7 entspricht. So ist gewährleistet, dass die Führungsflächen 51 und 29 sowie 35 und 27 gleichermaßen miteinander in Anlagekontakt stehen können.

Die zweite Führungsfläche 27 des Scharnierelements 9 wird durch eine weitere Stufe 55 begrenzt, wo sich die Höhe des Führungsbereichs 13 des Scharnierelements 9 auf die Dicke des Federstifts 15 verjüngt. Auf seiner verjüngten Seite weist der Führungsbereich 13 einen Anschlag 57 auf, an dem dieser in den Federstift 15 übergeht.

Der Anschlag 57 und/oder die Stufe 53 des Scharnierelements 9 können zur Montage des Federscharniers 1 an das Verriegelungselement 7 und/oder ein Ende 58 des Führungsbereichs 33 des Verriegelungselements 7 anschlagen, so dass dieses mittels des zweiten Scharnierelements 9 in das Gehäuse 5 eingedrückt werden kann. Hierzu wird das Verriegelungselement 7 im Bereich der Verriegelungsnase 37 elastisch verformt, so dass dieses im Bereich einer dritten Stufe 59, an der sich der Führungsbereich 13 von oben gesehen verjüngt, zu liegen kommt. Während des Einführens des zweiten Scharnierelements 9 in das Gehäuse 5 gleitet ein oberes Ende 61 des Verriegelungselements 7 solange an der vierten Führungsfläche 31 des Gehäuses 5 entlang, bis die Verriegelungsnase 37 in die Verriegelungsausnehmung 39 des Gehäuses 5 einrastet. Dabei ist darauf zu achten, dass das Verriegelungselement 7 ausreichend weit in das Gehäuse 5 eingeführt werden kann. Figur 1 zeigt das Verriegelungselement 7 sowie das zweite Scharnierelement 9 in einer Endposition, wobei diese maximal weit in das Gehäuse 5 eingeführt sind. Vorzugsweise kann das Verriegelungselement 7 um 0,2 mm weiter in das Gehäuse 5 eingeführt werden wie die endgültige Verriegelungsposition, bei der das obere Ende 61 an der Verriegelungsausnehmung 39, wie in den Figuren 2 und 3 gezeigt, anschlägt.

Das Federscharnier 1 kann also durch einfache Vormontage des zweiten Scharnierelements 9 sowie Einführen desselben in das Gehäuse 5 vormontiert werden. In einem zweiten Schritt können dann das erste und zweite Scharnierelement 3, 9 im Bereich des Scharniergelenks 43 miteinander verbunden werden.

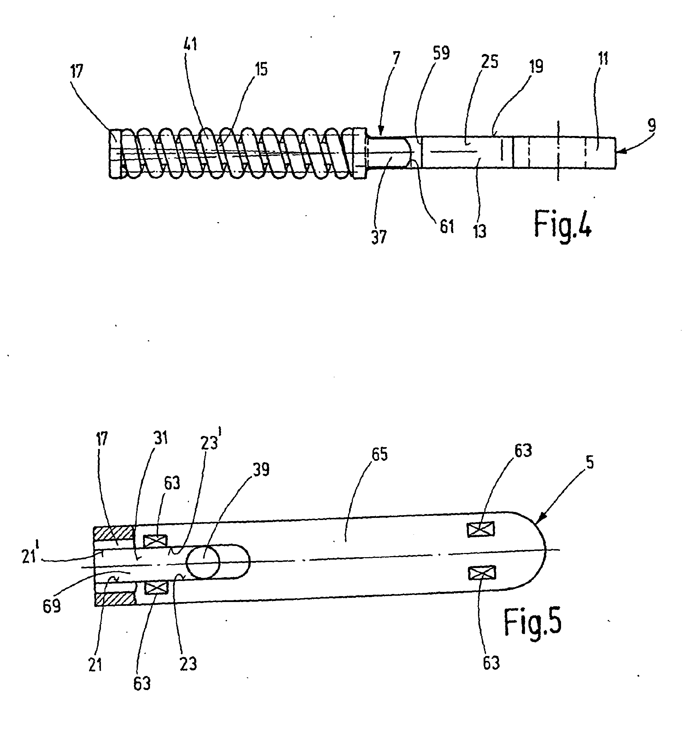

Figur 4 zeigt das zweite Scharnierelement 9 mit dem vormontierten Verriegelungselement 9 sowie der Feder 41 in Draufsicht. Gleiche Teile sind mit gleichen Bezugsziffern versehen, so dass insofern auf die Beschreibung der vorhergehenden Figuren verwiesen wird. Zu erkennen ist der Führungsbereich 13 mit der ersten Führungsfläche 25, der sich an der Stufe 59 verjüngt. Im Bereich der Verjüngung des Führungsbereichs 13 befindet sich das Verriegelungselement 7 mit der Verriegelungsnase 37. Das obere Ende 61 der Verriegelungsnase 37 ist bogenförmig abgerundet. Folglich kann auch die Verriegelungsausnehmung 39 entsprechend gebogen verlaufen. Dies ermöglicht eine besonders gute Verrastung des Verriegelungselements 7 im Gehäuse 5. Denkbar sind aber auch andere Formen von Ausnehmungen und darin eingreifender Rastmittel. Wesentlich ist dabei, dass diese sicher miteinander verrasten und so letztlich das zweite Scharnierelement 9 im Gehäuse 5 fixieren.

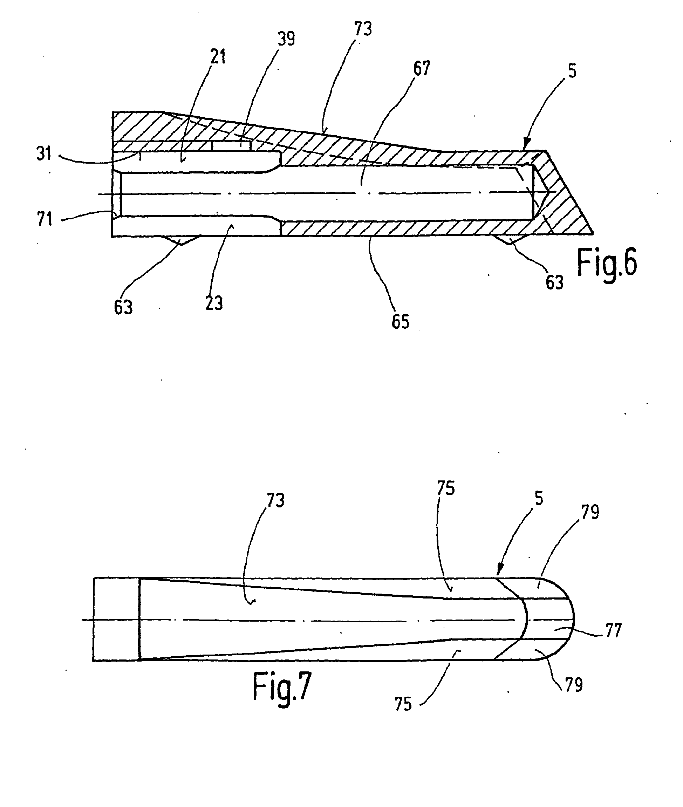

Die Figuren 5 bis 7 zeigen verschiedene Ansichten des Gehäuses 5. Gleiche Teile sind mit gleichen Bezugsziffern versehen, so dass insofern auf die Beschreibung der vorangehenden Figuren verwiesen wird.

An einer Unterseite 65 kann das Gehäuse 5 Schweißwarzen 63 aufweisen, mit denen dieses mit einem der Brillenteile 47, 49 verschweißbar ist.

Das Gehäuse 5 weist eine in Längsrichtung des Gehäuses verlaufende, als Bohrung 67 ausgebildete Ausnehmung auf, in die das vormontierte zweite Scharnierelement 9 einbringbar ist.

Ein Teilausbruch des Gehäuses 5, wie in Figur 5 gezeigt, sowie der Längsschnitt in Figur 6 lassen erkennen, dass in das Gehäuse 5 von unten, an der geöffneten Seite der Bohrung eine Nut 69 eingebracht ist, deren lichte Weite geringer ist als der Durchmesser der Bohrung 67. Im Bereich der Nut 69 weist das Gehäuse 5 die Gleitflächen 21, 23 sowie weitere Gleitflächen 21', 23' sowie die vierte Führungsfläche 31 auf. Die Nut 69 entspricht also in ihren Abmessungen dem Führungsbereich 13 des zweiten Scharnierelements 9, das in diese einbringbar und somit gleitend lagerbar ist. Das zweite Scharnierelement 9 kann also entlang der in Längsrichtung verlaufenden, seitlichen Begrenzungsflächen der Nut 69 im Gehäuse 5 in axialer Richtung des Federstifts 15 verschoben werden. Außerdem zu erkennen ist die Verriegelungsausnehmung 39 des Gehäuses 5, die bei diesem Ausführungsbeispiel kreisförmig ausgeführt ist. Diese kann somit besonders einfach als Sacklochbohrung in das Gehäuse 5 eingebracht werden.

In Figur 6 ist zu erkennen, dass die Bohrung 67 des Gehäuses 5 eine Fase 71 aufweist, die als Einführhilfe für das zweite Scharnierelement 9 in das Gehäuse 5 dient.

Auf seiner Oberseite, die in Figur 7 zu erkennen ist, verjüngt sich das Gehäuse entlang Flächen 73, 75, 77, 79. Vorteilhaft ist, dass im Bereich der Nut 69, wo die größten Kräfte übertragen werden, das Gehäuse 5 dementsprechend am höchsten, also stabil ausgeführt ist. Außerdem kann durch die von der Öffnung der Bohrung 67 nach rechts verlaufende Verjüngung eine ansprechende und schlanke Optik des Federscharniers 1 erzielt werden.

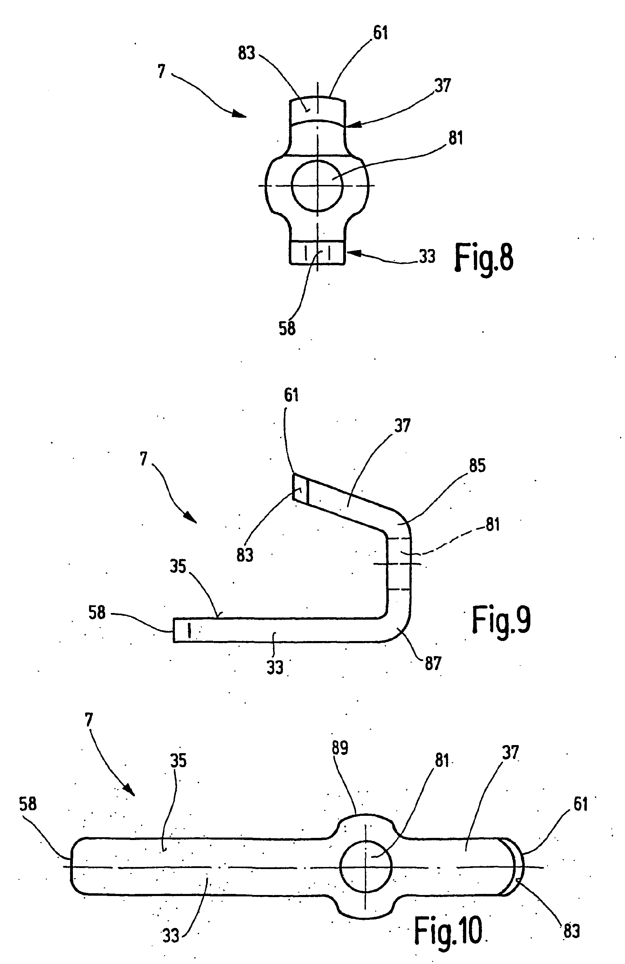

Die Figuren 8 bis 10 zeigen verschiedene Darstellungen des Verriegelungselements 7. Das Verriegelungselement 7 weist einen Durchbruch 81 auf, der als Stanzung oder Bohrung ausgeführt sein kann, in den der Federstift 15 des zweiten Scharnierelements 9 einbringbar ist.

Das obere Ende 61 der Verriegelungsnase 37 weist eine Anlagefläche 83 auf, die hier gekrümmt verläuft und an die Oberfläche der Sacklochbohrung der Verriegelungsausnehmung 37 des Gehäuses 5 angepasst ist. Dabei ist das obere Ende 61 bogenförmig gestaltet und mit einer über die gesamte Breite des Verriegelungselements 7 verlaufenden Abschrägung versehen.

Der Winkel der Abschrägung entspricht einem Biegewinkel, den die Verriegelungsnase 37 zur Verriegelungsausnehmung 39 einnimmt, so dass die Verriegelungsnase 37 sicher an der Wandung der Verriegelungsausnehmung 39 anliegt.

Vorteilhaft ist, dass das Gehäuse 5 eine Verriegelungsausnehmung 39 aufweist, die exakt an das obere Ende 61 der Verriegelungsnase 37 angepasst ist. So kann mit Hilfe des Verriegelungselements 7 die Bohrung 67 des Gehäuses 5 verschlossen und so die Feder 41 sowie der Federstift 15 vor Verunreinigungen und eventuell eindringenden Flüssigkeiten geschützt werden.

Wie in Figur 9 zu erkennen, ist das Verriegelungselement 7 aus Flachmaterial, insbesondere als Stanzbiegeteil, gefertigt, das zwei Biegungen 85 und 87 aufweist. Dabei beträgt der Biegewinkel der Biegung 87 circa 90°. An der Biegung 85 ist das Verriegelungselement 7 um einen stumpfen Winkel gebogen, der vorzugsweise circa 110° beträgt. Somit beträgt der Winkel im Scheitelpunkt der an die Oberfläche der Sacklochbohrung der Verriegelungsausnehmung 37 angepassten Abschrägung, die die Anlagefläche 83 bildet, vorzugsweise circa 20°.

In Figur 10, die das Verriegelungselement 7 in der Perspektive wie Figur 8 zeigt, jedoch im nicht gebogenen Zustand, ist die fünfte Führungsfläche 35 des Führungsbereichs 33 zu erkennen. Die fünfte Führungsfläche 35 sowie die weiteren Führungsflächen des Federscharniers 1 können mit einer speziellen Gleitbeschichtung versehen werden. Weiter kann das Material des Verriegelungselements 7 so gewählt werden, dass dieses mit dem Material des Führungsbereichs 13 besonders gut zusammenwirkt, beziehungsweise besonders gute. Gleiteigenschaften aufweist, also einen niedrigen Reibungskoeffizienten gegenüber dem Führungsbereich 13 aufweist.

Im Bereich des Durchbruchs 81 weist das streifenförmige Material des Verriegelungselements 7 eine Erweiterungszone 89 auf, die vorzugsweise ringförmig gestaltet und zum Abdichten der Federmechanik an den Durchmesser der Bohrung 67 angepasst ist. An die Erweiterungszone 89, die den Durchbruch 81 umgibt, können jeweils von einer Seite die Feder 41 sowie die Stufe 57 des zweiten Scharnierelements 9 anschlagen. Es wird also deutlich, dass die Dicke der Erweiterungszone 89 direkt die Baulänge -bei gleicher Funktionalität- des Federscharniers 1 beeinflusst.

Die vorzugsweise ringförmige Erweiterungszone 89 kann ebenfalls aus dem Flachmaterial, insbesondere einem Blechstreifen, des Verriegelungselements 7, beispielsweise durch Stanzen, gefertigt werden, was ein besonders kurz bauendes Federscharnier 1 ermöglicht.

In der Abwicklung gemäß Figur 10 ist zu erkennen, dass das Verriegelungselement 7, rechts und links des Durchbruchs 81, jeweils einen streifenförmigen Abschnitt aufweist, wobei ein erster streifenförmiger Abschnitt den Führungsbereich 33 und ein zweiter streifenförmiger Abschnitt die Verriegelungsnase 37 realisieren. In diesem Ausführungsbeispiel ist der streifenförmige Abschnitt des Führungsbereichs 33 länger als der der Verriegelungsnase 37. Es ist auch denkbar, diese gleich lang oder in umgekehrten Längenverhältnissen vorzusehen.

So ist es also denkbar, den Führungsbereich 33 des Verriegelungselements soweit zu verkürzen, dass dieser lediglich zur Stabilisierung desselben dient. In diesem Fall könnte die dritte Führungsfläche 29 entsprechend vergrößert werden und das zweite Scharnierelement 9 im Gehäuse 5 entsprechend führen.

Bei dem genannten Ausführungsbeispiel weist das zweite Scharnierelement 9 ein Scharnierauge auf, das mit einem oder zwei weiteren Scharnieraugen des ersten Scharnierelements 3 zusammenwirkt. Es ist denkbar, dieses Verhältnis umzukehren oder auch eine beliebige Kombination von miteinander zusammenwirkenden Scharnieraugen vorzusehen.

## Patentansprüche

1. Federscharnier für Brillen mit einem Brillengläser umfassenden Mittelteil und Bügeln, mit mindestens einem Federelement, einem mindestens ein Scharnierauge umfassenden Scharnierelement (9) und mit einem Verriegelungselement (7), das aus elastisch verformbarem Flachmaterial besteht, eine Verriegelungsnase (37) und einen Durchbruch (81) zur Aufnahme eines Federstifts und im Bereich des Durchbruchs (81) auf gegenüberliegenden Seiten des Durchbruchs (81) aneinander angrenzende streifenförmige Abschnitte (33, 37) aufweist, **dadurch gekennzeichnet, dass** die streifenförmigen Abschnitte unterschiedlichen Längen aufweisen, wobei der ersten längeren Abschnitt als Führungsbereich (33) für das Scharnierelement (9) und der zweite kürzere Abschnitt als Verriegelungsnase (37) dient.

2. Federscharnier nach Anspruch 1, **dadurch gekennzeichnet, dass** das Flachmaterial aus einem Blechstreifen besteht.

3. Federschamier nach Anspruch 1 oder 2, **dadurch gekennzeichnet, dass** das Verriegelungselement (7) als Stanzbiegeteil ausgebildet ist.

4. Federscharnier nach einem der vorhergehenden Ansprüche, **dadurch gekennzeichnet, dass** das Verriegelungselement (7) zwei im Bereich des Durchbruchs (81) aneinander angrenzende streifenförmige Abschnitte aufweist.

5. Federscharnier nach einem der vorhergehenden Ansprüche, **dadurch gekennzeichnet, dass** das Verriegelungselement (7) im Bereich des Durchbruchs (81) eine Erweiterungszone (89) aufweist.

6. Federschamier nach einem der vorhergehenden Ansprüche, **dadurch gekennzeichnet, dass** die Erweiterungszone (89) ringförmig ausgebildet ist.

7. Federscharnier nach einem der vorhergehenden Ansprüche, **dadurch gekennzeichnet, dass** der Führungsbereich (33) des Verriegelungselements (7) als Niederhalter und/oder Verdrehsicherung für das Verriegelungselement (7) und/oder als Abstützbereich für das zweite Scharnierelement (9) ausgelegt ist.

8. Federscharnier nach einem der vorhergehenden Ansprüche, **dadurch gekennzeichnet, dass** der Führungsbereich (33) des Verriegelungselements (7) eine Führungsfläche (35) zum Führen des zweiten Schamierelements (9) aufweist.

## Claims

1. A spring hinge for eyeglasses with a middle part comprising eyeglass lenses and temples, with at least one spring element, a hinge element (9) comprising at least one gudgeon, and with a locking element (7) consisting of elastically deformable flat material and having a locking nose (37), a passage (81) for receiving a spring pin, and strip-shaped sections (33, 37) abutting in the area of the passage (81) at opposite sides of the passage (81), **characterised in that** the strip-shaped sections have different lengths, wherein the first longer section serves as guide area (33) for the hinge element (9) and the second shorter section as locking nose (37).

2. The spring hinge according to claim 1 **characterised in that** the flat material consists of a metal strip.

3. The spring hinge according to claim 1 or 2 **characterised in that** the locking element (7) is formed as a punched bending part.

4. The spring hinge according to one of the preceding claims **characterised in that** the locking element (7) exhibits two strip-shaped sections abutting in the area of the passage (81).

5. The spring hinge according to one of the preceding claims **characterised in that** the locking element (7) exhibits an extension zone (89) in the area of the passage (81).

6. The spring hinge according to one of the preceding claims **characterised in that** the extension zone (89) is ring-shaped.

7. The spring hinge according to one of the preceding claims **characterised in that** the guide area (33) of the locking element (7) is designed as a retainer and/or anti-twist device for the locking element (7) and/or as support area for the second hinge element (9).

8. The spring hinge according to one of the preceding claims **characterised in that** the guide area (33) of the locking element (7) exhibits a guide surface (35) to guide the second hinge element (9).

## Revendications

1. Charnière à ressort pour lunettes comportant une partie centrale équipée de verres de lunettes et des branches, comprenant au moins un élément à ressort, un élément de charnière (9) comportant au moins un oeil de charnière, et un élément de verrouillage (7) qui est réalisé dans matériau plat élastiquement déformable, et qui présente un ergot de verrouillage (37), un passage (81) destiné à recevoir une tige à ressort, et des sections (33, 37) qui sont en forme de bandes et contigues dans la zone du passage (81) sur des faces opposées du passage (81), **caractérisée en ce que** les sections en forme de bandes présentent des longueurs différentes, la première section plus longue servant de zone de guidage (33) à l'élément de charnière (9) et la seconde section plus courte servant d'ergot de verrouillage (37).

2. Charnière à ressort selon la revendication 1, **caractérisée en ce que** le matériau plat est constitué d'une bande de tôle.

3. Charnière à ressort selon la revendication 1 ou 2, **caractérisée en ce que** l'élément de verrouillage (7) est réalisé sous la forme d'une pièce découpée et pliée.

4. Charnière à ressort selon l'une des revendications précédentes, **caractérisée en ce que** l'élément de verrouillage (7) comporte deux sections qui sont en forme de bandes et contigues dans la zone du passage (81).

5. Charnière à ressort selon l'une quelconque des revendications précédentes, **caractérisée en ce que** l'élément de verrouillage (7) présente une zone d'extension (89) dans la zone du passage (81).

6. Charnière à ressort selon l'une quelconque des revendications précédentes, **caractérisée en ce que** la zone d'extension (89) se présente sous la forme d'un anneau.

7. Charnière à ressort selon l'une quelconque des revendications précédentes, **caractérisée en ce que** la zone de guidage (33) de l'élément de verrouillage (7) est conçue sous la forme d'un élément de retenue et/ou d'un système de blocage en rotation de l'élément de verrouillage (7) et/ou sous la forme d'une zone d'appui destinée au second élément de charnière (9).

8. Charnière à ressort selon l'une quelconque des revendications précédentes, **caractérisée en ce que** la zone de guidage (33) de l'élément de verrouillage (7) présente une surface de guidage (35) destinée au guidage du second élément de charnière (9).
